(19) 

**Europäisches Patentamt**
**European Patent Office**
**Office européen des brevets**

(11) **EP 4 663 844 A1**

(12) **EUROPEAN PATENT APPLICATION**
published in accordance with Art. 153(4) EPC

(43) Date of publication:
**17.12.2025 Bulletin 2025/51**

(21) Application number: **24753359.9**

(22) Date of filing: **06.02.2024**

(51) International Patent Classification (IPC):
**D06N 3/00** (2006.01)    **D06N 3/14** (2006.01)

(52) Cooperative Patent Classification (CPC):
**D06N 3/00; D06N 3/14**

(86) International application number:
**PCT/JP2024/003973**

(87) International publication number:
**WO 2024/166916 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2023 JP 2023017631**

(71) Applicant: **Kuraray Co., Ltd.**
**Kurashiki-shi, Okayama 710-0801 (JP)**

(72) Inventors:
• **MEGURO, Masashi**
  **Okayama-shi, Okayama 702-8601 (JP)**
• **OOKURA, Mamoru**
  **Kurashiki-shi, Okayama 710-0801 (JP)**

(74) Representative: **Vossius & Partner**
**Patentanwälte Rechtsanwälte mbB**
**Siebertstrasse 3**
**81675 München (DE)**

(54) **ARTIFICIAL LEATHER BASE MATERIAL, AND ARTIFICIAL LEATHER BASE MATERIAL MANUFACTURING METHOD**

(57)    Provided is an artificial leather base material containing a polyamide fiber having excellent shape stability when wetted with water, and the artificial leather base material contains a polyamide fiber and an elastic polymer, in which in measurement data obtained by X-ray diffraction measurement of the polyamide fiber, a peak intensity γ of a diffraction peak corresponding to a γ-type crystal of a polyamide resin constituting the polyamide fiber and a peak intensity α of a diffraction peak corresponding to an α-type crystal of the polyamide resin satisfy a relationship of $0.690 \leq \gamma/\alpha \leq 1.100$.

EP 4 663 844 A1

**Description**

Technical Field

The present invention relates to an artificial leather base material and a method for producing an artificial leather base material.

Background Art

Conventionally, a napped artificial leather in which a surface of an artificial leather base material in which polyurethane is impregnated into a non-woven fabric is napped in a suede tone or nubuck tone, and a silvered artificial leather in which a polyurethane layer is laminated on a surface of an artificial leather base material have been known. Such artificial leather is widely used as a material for clothing, shoes, furniture, car seats, miscellaneous goods, and the like.

In recent years, there has been a demand for establishment of a solvent-free production process in the production of artificial leather due to concerns about adverse effects on the human body and the environments caused by the use of organic solvents. In order to respond to such a demand, for example, as an ultrafine fiber-generating fiber used for a fiber-entangled body, a type in which an extraction component is extracted and removed with an aqueous solution to obtain ultrafine fibers has been studied. In addition, as the resin to be impregnated into the inside of the fiber-entangled body, an aqueous dispersion of an elastic polymer has been studied. In particular, a large number of elastic polymers made of long fibers have been studied, which do not require a series of large-sized facilities such as a raw cotton supply apparatus, a fiber opening apparatus, and a carding machine, and have an advantage that the strength is higher than that of a short fiber non-woven fabric.

For example, PTL 1 discloses a method for producing a leather-like sheet containing a long fiber web made of ultrafine fiber-generating fibers which are a water-soluble thermoplastic polyvinyl alcohol-based resin and a heat-sensitive gelling emulsion.

In addition, PTL 2 discloses a base material for artificial leather having ultrafine fiber bundles, which simultaneously satisfies the following conditions: 8 to 70 ultrafine fibers having a substantially circular cross-sectional shape are bundled; the cross-sectional area is 170 to 700 $\mu m^2$; the flatness is 4.0 or less; the cross section of the ultrafine fiber bundle exists in the range of 1,500 to 3,000 fibers/mm$^2$; and the gap size between the ultrafine fiber bundles is 70 $\mu m$ or less in an arbitrary cross section parallel to the thickness direction of the non-woven fabric structure.

In addition, PTL 3 discloses a leather-like sheet composed of a fiber-entangled body composed of fibers having an average single fiber fineness of 0.001 to 10 dtex and an elastic polymer contained therein. Further, PTL 3 indicates that the fiber-entangled body has at least one of an ultrafine fiber bundle and hollow fibers, that the elastic polymer is obtained by solidifying a urethane resin composition containing a water-soluble polyoxyalkylene-based compound, an organic acid ammonium salt or an inorganic acid ammonium salt, and a self-emulsifying aqueous polyurethane resin that is self-emulsified with an anionic group, and that an average distance between the outer peripheral fibers of the ultrafine fiber bundle or the hollow fibers and the elastic polymer is 1 $\mu m$ or more.

Citation List

Patent Literature

PTL 1:JP 2006-002288 A
PTL 2:JP 2008-308784 A
PTL 3:JP 2014-065979 A

Summary of Invention

Technical Problem

In the environment-compatible type artificial leather proposed in the past, although good quality is relatively easy to be obtained in the case of polyester ultrafine long fibers, the actual situation is that satisfactory quality cannot always be secured in the case of polyamide ultrafine long fibers.

For example, in PTLs 1 and 2, in a case where a leather-like sheet or a base material for artificial leather is produced using a water-soluble thermoplastic resin and nylon 6 as sea components, when the melting point of the water-soluble thermoplastic resin is not lower than the melting point of the nylon 6 by 30°C or more, tension during spinning tends to be less likely to act on the nylon 6. Therefore, the crystal orientation of the resin as the sea component is low, and even if the spinning speed is increased, it is difficult to eliminate the phenomenon. Therefore, for example, it is necessary to change the crystal orientation and the crystal structure by performing a drawing treatment after the spinning. In a case where such a measure is not taken, the ultrafine fibers of nylon 6 are significantly stretched when wetted with water, and the leather-like sheet or the base material for artificial leather lacks shape stability when wetted with water.

In addition, in the leather-like sheet described in PTL 3, improvement in appearance and texture can be expected by controlling the structure of the elastic polymer, but in a case where a resin having a melting point not lower than the melting point of nylon 6 by 30°C or more is selected as the sea component resin and a drawing treatment after spinning is not performed, there is a problem that this system also lacks shape stability when wetted with water.

When the above-described drawing treatment is performed after spinning, the number of production steps is increased, which is disadvantageous in terms of productivity. In addition, when a sea component having a melting point sufficiently lower than that of nylon 6 is used, the degree of freedom in selecting a resin is reduced. Therefore, an artificial leather base material having excellent shape stability when wetted with water has been required even when fibers made of a polyamide resin such as nylon 6 are used.

An object of the present invention is to provide an artificial leather base material containing polyamide fibers, which solves the above-described problems and has excellent shape stability when wetted with water.

Solution to Problem

As a result of various studies, the present inventors have found that the above-described problems can be solved by setting a peak intensity $\gamma$ of a diffraction peak corresponding to a $\gamma$-type crystal of a polyamide resin constituting a polyamide fiber and a peak intensity $\alpha$ of a diffraction peak corresponding to an $\alpha$-type crystal of the polyamide resin to a specific relationship, and have completed the present invention. That is, the present invention includes the following inventions.

[1] An artificial leather base material containing a polyamide fiber and an elastic polymer, in which in measurement data obtained by X-ray diffraction measurement of the polyamide fiber, a peak intensity $\gamma$ of a diffraction peak corresponding to a $\gamma$-type crystal of a polyamide resin constituting the polyamide fiber and a peak intensity $\alpha$ of a diffraction peak corresponding to an $\alpha$-type crystal of the polyamide resin satisfy a relationship of $0.690 \leq \gamma/\alpha \leq 1.100$.

[2] The artificial leather base material according to [1], in which the polyamide fiber has an average diameter of 7.5 $\mu$m or less.

[3] The artificial leather base material according to [1] or [2], in which the polyamide fiber has an average fineness of 0.50 dtex or less.

[4] The artificial leather base material according to any one of [1] to [3], in which the polyamide fiber contains a polyamide resin and an olefin-maleic anhydride resin obtained by modifying a terminal of an olefin resin with maleic anhydride.

[5] The artificial leather base material according to [4], in which a content of the olefin-maleic anhydride resin in the polyamide fiber is more than 0% by mass and 30% by mass or less.

[6] The artificial leather base material according to [4] or [5], in which the olefin-maleic anhydride resin is modified with a third component different from maleic anhydride.

[7] The artificial leather base material according to any one of [1] to [6], in which a content of the elastic polymer is 5 to 45% by mass with respect to a total mass of the polyamide fiber and the elastic polymer.

[8] A napped artificial leather obtained by napping a surface of the artificial leather base material according to any one of [1] to [7].

[9] A method for producing the artificial leather base material according to any one of [1] to [7], the method including:

a step of spinning an ultrafine fiber-generating fiber using a water-soluble thermoplastic resin and a polyamide resin to which an olefin-maleic anhydride resin is added;
a step of preparing a fiber web formed from the ultrafine fiber-generating fiber;
a step of forming an entangled fiber sheet using the fiber web;
a step of impregnating the entangled fiber sheet with an elastic polymer; and
a step of removing the water-soluble thermoplastic resin from the ultrafine fiber-generating fiber at any time from before the impregnation to after the impregnation of the elastic polymer.

Advantageous Effects of Invention

According to the present invention, an artificial leather base material containing a polyamide fiber, which is excellent in shape stability when wetted with water, can be obtained.

Description of Embodiments

Hereinafter, an artificial leather base material according to an embodiment of the present invention and a method for producing an artificial leather base material according to an embodiment of the present invention (hereinafter, also referred to as an "artificial leather base material of the present embodiment" and a "method for producing an artificial leather base material of the present embodiment") will be described.

[Artificial Leather Base Material]

The artificial leather base material of the present embodiment is an artificial leather base material containing a polyamide fiber and an elastic polymer, in which in data obtained by X-ray diffraction measurement of the polyamide fiber, a peak intensity $\gamma$ of a diffraction peak corresponding to a $\gamma$-type crystal of a polyamide resin constituting the polyamide fiber and a peak intensity $\alpha$ of a diffraction peak corresponding to an $\alpha$-type crystal of the polyamide resin satisfy a relationship of $0.690 \leq \gamma/\alpha \leq 1.100$.

In the artificial leather base material, when the polyamide fiber satisfies the above-described relationship, the artificial leather base material can have excellent shape stability when wetted with water.

As a result of various studies, the present inventors have found that when the crystal structure in the polyamide resin constituting the polyamide fiber contains a $\gamma$-type crystal structure and the ratio of the $\gamma$-type crystal structure to an $\alpha$-type crystal structure is a certain value or more, the artificial leather base material is less likely to stretch even when wetted with water. This is presumed to be one of the reasons why the artificial leather base material containing the polyamide fiber satisfying the above-described relationship has excellent shape stability when wetted with water.

In the description herein, the peak intensity $\gamma$ of the diffraction peak corresponding to the $\gamma$-type crystal and the peak intensity $\alpha$ of the diffraction peak corresponding to the $\alpha$-type crystal are values obtained by the following procedures (i) to (iii).

(i) The polyamide fiber is subjected to X-ray diffraction measurement using Cu as an X-ray source to obtain a measurement profile at 2θ of 5° to 35°.

(ii) Measurement data obtained by performing the same measurement in the absence of a sample is used as blank data, and data obtained by subtracting the blank data from the measurement profile obtained in (i) above is used as analysis data.

(iii) In the analysis data, the value at 2θ = 5° and the value at 2θ = 35° are defined as both ends, a line connecting the both ends with a straight line is defined as a baseline, the peak intensity of the diffraction peak at 2θ = 21.3° $\pm$ 0.2°C corresponding to the $\gamma$-type crystal with respect to the baseline is defined as y, and the peak intensity of the diffraction peak at 2θ = 20.1° $\pm$ 0.2°C corresponding to the $\alpha$-type crystal is defined as $\alpha$. Then, the value of $\gamma/\alpha$ is calculated.

More specifically, $\gamma$ and $\alpha$ are measured by the procedure described in Examples.

$\gamma/\alpha$ is more preferably 0.705 or more, and still more preferably 0.710 or more, from the viewpoint of more easily enhancing the shape stability when wetted with water. On the other hand, from the viewpoint of ease of production, $\gamma/\alpha$ is more preferably 1.000 or less, and still more preferably 0.900 or less. In other words, $\gamma/\alpha$ is 0.690 to 1.100, preferably 0.690 to 1.000, and more preferably 0.705 to 1.000.

The ratio $\gamma/\alpha$ can be set within the above range by, for example, appropriately selecting a hydrophobic component to be described later and adding the hydrophobic component to the polyamide resin.

<Polyamide Fiber>

The polyamide fiber may be a polyamide short fiber, or may be a polyamide long fiber because of its excellent physical properties.

In the description herein, the "long fiber" means a continuous fiber which is not a short fiber intentionally cut after spinning. To be more specific, it means, for example, a filament or a continuous fiber that is not a short fiber intentionally cut so as to have a fiber length of about 3 to 80 mm. Further, in the description herein, the "short fiber" is a fiber intentionally cut after spinning, and is, for example, a fiber having a fiber length of about 3 to 80 mm.

The fiber length of the long fibers of the sea-island type composite fibers before conversion into ultrafine fibers, which will be described later, is preferably 100 mm or more, and more preferably 200 mm or more. The long fiber may be a continuous fiber having a fiber length of several meters, several hundred meters, several kilometers, or more, which is produced by, for example, a spunbond method and continuously spun, as long as it can be technically produced and is not inevitably cut in the production process. A part of the long fiber may be inevitably cut into a short fiber in the production process due to needle punching at the time of entanglement or buffing of the surface.

The polyamide fiber is preferably used as a non-woven fabric composed of the polyamide fiber. The non-woven fabric can be produced by shrinking a web entangled sheet composed of a laminate of fiber webs in hot water or a moist heat atmosphere as necessary, and moving the web entangled sheet in the feed direction and drying the web entangled sheet while tentering the web entangled sheet in a direction perpendicular to the feed direction as necessary. Hereinafter, the non-woven fabric composed of the polyamide fiber will be described in detail together with a method for producing the same.

The non-woven fabric which is an entangled body of ultrafine fibers is a non-woven fabric of a fiber bundle of ultrafine fibers in which a plurality of ultrafine fibers form a fiber bundle. Such a non-woven fabric can be obtained, for example, by subjecting ultrafine fiber-generating fibers such as sea-island type (matrix-domain type) composite fibers to an entanglement treatment and an ultrafine fiber-forming treatment. Hereinafter, an example of using the sea-island type composite fiber will be described in detail.

Examples of a method for producing a non-woven fabric which is an entangled body of ultrafine fibers include a method in which sea-island type composite fibers are melt-spun to produce a fiber web, the fiber web is subjected to the entanglement treatment, and then the sea component is selectively removed from the sea-island type composite fibers to form ultrafine fibers. In any of the steps from the removal of the sea component of the sea-island type composite fiber to the formation of ultrafine fibers, the sea-island type composite fiber may be densified by a fiber shrinkage treatment such as a heat shrinkage treatment with steam, hot water, or dry heat.

The ultrafine fiber-generating fiber is a fiber that is formed into a fiber having a small fineness by, for example, performing melt spinning and subjecting the spun fiber to a chemical post-treatment or a physical post-treatment. Specific examples of the ultrafine fiber-generating fiber include a sea-island type composite fiber and a peeling and splitting type composite fiber.

When the ultrafine fiber-generating fiber is a sea-island type composite fiber, the island component is dispersed in the sea component serving as a matrix in the fiber cross section, and ultrafine fibers in the form of a fiber bundle are generated by removing the sea component. In addition, the peeling and splitting type composite fiber has a plurality of different resins alternately arranged on the outer periphery to form a petal shape or a superimposed shape, and is split by peeling the plurality of different resins by a physical treatment to generate a bundle-shaped ultrafine fiber.

After spinning, the ultrafine fiber-generating fiber may be subjected to drawing treatment, if necessary. The drawing treatment can be performed, for example, while heating.

When the ultrafine fibers contain a polyamide resin, a soft surface touch and an excellent texture can be obtained.

The polyamide resin is not particularly limited as long as it has an amide bond, and examples thereof include polyamide 6, polyamide 6,6, polyamide 6,10, polyamide 10,10, polyamide 11, and polyamide 12.

In general, a polyamide fiber using a polyamide resin having an average number of carbon atoms between amide bonds of 7 or less generally tends to have high water absorption. However, as a result of intensive studies by the present inventors, although the reason is not clear, it has been found that even in a polyamide fiber containing a polyamide resin having an average number of carbon atoms between amide bonds of 7 or less, the crystal structure in the polyamide fiber contains a γ-type crystal, and as the proportion of the γ-type crystal increases, the artificial leather base material tends to be less likely to stretch even when wetted with water.

Therefore, as the polyamide resin contained in the polyamide fiber, a polyamide resin having an average number of carbon atoms between amide bonds of 7 or less, which is relatively easily available and has been used in a wide range of applications, can be preferably used. Specifically, polyamide 6 and polyamide 6,6 are preferable, and polyamide 6 is more preferable.

The number of carbon atoms between amide bonds varies depending on the polyamide resin, and two types of carbon numbers may be alternately repeated. Therefore, in the description herein, when two types of carbon numbers are alternately repeated, the arithmetic average value of the carbon numbers of two carbons between three amide bonds arranged in order is defined as the average number of carbon atoms. According to this, for example, the average number of carbon atoms of polyamide 4 is determined to be 4, the average number of carbon atoms of polyamide 6 is determined to be 6, the average number of carbon atoms of polyamide 6,6 is determined to be 6, the average number of carbon atoms of polyamide 6,10 is determined to be 8, the average number of carbon atoms of polyamide 10,10 is determined to be 10, the average number of carbon atoms of polyamide 11 is determined to be 11, and the average number of carbon atoms of polyamide 12 is determined to be 12.

From the viewpoint of easily suppressing the water absorption of the polyamide resin, a hydrophobic component is preferably added to the polyamide resin.

Examples of the hydrophobic component include an olefin resin, a fluororesin, and a silicone resin. From the viewpoint of environmental aspects or chemical resistance, it is preferable to use an olefin resin, and it is more preferable that the terminal of the olefin resin is modified with maleic anhydride.

In other words, the polyamide fiber preferably contains a polyamide resin and an olefin-maleic anhydride resin obtained by modifying the terminal of an olefin resin with maleic anhydride.

Maleic anhydride reacts with a terminal amino group or an amide bond site of the polyamide resin to form a bond. Therefore, the compatibility between the olefin resin and the polyamide resin can be improved by using the maleic anhydride-modified olefin resin. In addition, the use of a maleic anhydride-modified olefin resin makes it easy to ensure spinning stability during melt spinning.

The content of the hydrophobic component in the polyamide fiber is preferably more than 0% by mass and 30% by mass or less, more preferably 1.0 to 25% by mass, still more preferably 1.5 to 20% by mass, and even more preferably 2.0 to 20% by mass from the viewpoint of easily suppressing the water absorption of the polyamide resin to a certain extent.

The content of the olefin-maleic anhydride resin in the polyamide fiber is preferably more than 0% by mass and 30% by mass or less, more preferably 1.0 to 25% by mass, still more preferably 1.5 to 20% by mass, and even more preferably 2.0 to 20% by mass from the viewpoint of making it easy to increase the value of $\gamma/\alpha$ or from the viewpoint of making it easy to obtain the shape stability when wetted with water.

The modification amount of the olefin-maleic anhydride resin with maleic anhydride is preferably 1 to 15 mol%, more preferably 1.5 to 10 mol%, and still more preferably 2 to 7.5 mol% from the viewpoint of easily adjusting the value of $\gamma/\alpha$ or the shape stability when wetted with water.

The modification amount of the olefin-maleic anhydride resin with maleic anhydride is measured by infrared spectroscopy, and specifically measured by the method described in Examples.

The melting point of the olefin-maleic anhydride resin is preferably 80 to 120°C, which is a temperature at which the olefin-maleic anhydride resin can be melted before the polyamide resin is melted, from the viewpoint of improving kneadability when the olefin-maleic anhydride resin is melt-mixed with the polyamide resin.

The melting point of the olefin-maleic anhydride resin is determined by differential scanning calorimetry.

From the viewpoint of thermal stability during melting, the olefin-maleic anhydride resin may be modified with a third component different from maleic anhydride.

Examples of the third component for modifying the olefin-maleic anhydride resin include butyl acrylate, ethyl acrylate, and methyl acrylate.

When the melting point of the olefin-maleic anhydride resin is within the above range, the olefin-maleic anhydride resin may be modified with a third component different from maleic anhydride or may not be modified.

If necessary, the polyamide resin constituting the polyamide fiber may contain, as other components, for example, color pigments such as carbon black; white pigments such as zinc white, white lead, lithopone, titanium dioxide, precipitated barium sulfate, and barite powder; dyes; fillers; antifungal agents; antioxidants; light resistant agents such as ultraviolet absorbers and light stabilizers; additives such as flame retardants; antifungal agents; hydrolysis inhibitors; lubricants; fine particles; and frictional resistance adjusting agents.

Hereinafter, the method of using the sea-island type composite fiber as the ultrafine fiber-generating fiber will be described in more detail.

As described above, the ultrafine fiber-generating fiber may be a short fiber or a long fiber.

On the other hand, the thermoplastic resin of the sea component used for forming the sea-island type composite fiber needs to be removable only with water without using a solvent for environmental compatibility.

Specific examples of the thermoplastic resin as the sea component include a polyvinyl alcohol-based resin, a water-soluble polyester resin, an easily alkali-decomposable modified polyester resin, a polyacrylamide resin, and a carboxymethyl cellulose resin. Among them, a polyvinyl alcohol-based resin is preferably used, and a modified polyvinyl alcohol is more preferably used, from the viewpoints of biodegradability, a small environmental load of treatment after extraction, melt spinnability, water solubility, and fiber physical properties.

From the viewpoints of copolymerizability, melt spinnability, and water solubility of fibers, preferable examples of the copolymerizable monomer used in the modified polyvinyl alcohol include $\alpha$-olefins having 4 or less carbon atoms such as ethylene, propylene, 1-butene, and isobutene; and vinyl ethers such as methyl vinyl ether, ethyl vinyl ether, n-propyl vinyl ether, isopropyl vinyl ether, and n-butyl vinyl ether.

The content of the copolymerization unit in the polyvinyl alcohol is preferably 1 to 20 mol%, more preferably 4 to 15 mol%, and still more preferably 6 to 13 mol%.

Further, when the copolymerization unit is ethylene, the fiber physical properties are enhanced, and therefore, ethylene-modified polyvinyl alcohol is particularly preferred. The ethylene unit content in the ethylene-modified polyvinyl alcohol is preferably 4 to 15 mol%, and more preferably 6 to 13 mol%.

The mass ratio of the sea component to the island component in the sea-island type composite fiber is not particularly limited, and is preferably, for example, in the range of (sea component):(island component) = 5:95 to 80:20. When the ratio of the sea component polymer in the sea-island type composite fiber is 5% by mass or more, the spinning stability of the sea-island type composite fiber is less likely to decrease, and industrial productivity is easily secured. In addition, when the elastic polymer is applied, voids having a necessary size are easily formed between the ultrafine fiber bundle and the elastic polymer after the sea component is removed, and as a result, a bulging feeling, a richness feeling, a dense surface feeling, and the like are easily obtained. On the other hand, when ratio of the sea component polymer is 80% by mass or less, the shape and the distribution state of the island component in the cross section of the sea-island type fiber are stabilized, and it is easy to prevent deterioration of quality stability.

The sea-island type composite fiber is converted into an ultrafine fiber having a fineness lower than that of the sea-island type composite fiber by being subjected to an ultrafine fiber-forming treatment later.

When the ultrafine fibers are formed from the sea-island type composite fibers, the number of ultrafine fibers constituting one ultrafine fiber bundle is 8 or more from the viewpoint of easy bendability of the ultrafine fiber bundle, that is, easy entanglement in the non-woven fabric structure, easy bendability of the base material for artificial leather to be finally obtained, and the like, and is 70 or less from the viewpoints of easy bendability of the ultrafine fiber bundle, deformability in the cross-sectional shape, color developability of the base material for artificial leather to be finally obtained, and the like. The number of ultrafine fibers is preferably 10 to 60, and more preferably 12 to 45.

When the number of ultrafine fibers is 8 or more, the easy bendability of the ultrafine fiber bundle is ensured, and the constraint number ratio when the non-woven fabric structure contains the elastic polymer, that is, the ratio of the number of ultrafine fibers arranged on the outermost periphery to the number of constituent fibers of the ultrafine fiber bundle is prevented from increasing, the easy bendability of the ultrafine fiber bundle is hardly inhibited by the elastic polymer, and the texture is hardly cured even when the elastic polymer is contained. Therefore, unevenness in the content state of the elastic polymer is less likely to be manifested as unevenness in the texture of the base material for artificial leather, and the value as an industrial product is likely to be recognized. On the other hand, when the number of ultrafine fibers is 70 or less, it is considered that the easy bendability of each ultrafine fiber itself is prevented from being canceled out due to an increase in the contact area between the ultrafine fibers in the ultrafine fiber bundle, and it becomes easy to prevent a decrease in the easy bendability.

Next, a fiber web is produced using the ultrafine fiber-generating fiber.

As a method for producing a fiber web, in the case of using long fibers, it is also possible to employ a method in which ultrafine fiber-generating fibers melt-spun using a so-called spunbond method are collected on a net without cutting to form a fiber web of continuous long fibers.

Specifically, using a spinneret for composite spinning in which a large number of nozzle holes are arranged in a predetermined pattern, a molten strand of the sea-island type composite fiber is continuously discharged from a spinning nozzle at a predetermined discharge rate, and a high-speed airflow is applied using a suction device such as an air jet nozzle while the molten strand is substantially cooled and solidified by cooling air at any stage from immediately below the nozzle holes to the suction device, so that the composite fiber is uniformly pulled and thinned to have a target diameter or fineness.

The high-speed airflow is applied such that the average spinning speed, which corresponds to the mechanical take-off speed in normal spinning, is anywhere in the range of 1,000 to 6,000 m/min. Furthermore, a fiber web of long fibers can be produced by a spunbond method in which a fiber web is formed by collecting and depositing composite fibers on a collection surface of a conveyor belt-shaped moving net or the like while opening the composite fibers by a collision plate, an airflow, or the like according to the texture of the obtained fiber web and sucking the composite fibers from the opposite surface side of the net. In addition, the fiber web may be subjected to a treatment by hot pressing in order to impart shape stability to the fiber web, and the fiber web may be subjected to fusion along with the treatment.

When the basis weight or thickness of the obtained fiber web is insufficient, wrapping (supplying one fiber web from a direction perpendicular to the flow direction of the process and folding it substantially in the width direction, or folding a fiber web supplied from a direction parallel to the flow direction of the process in the length direction thereof) or stacking (stacking a plurality of fiber webs) is performed for adjustment so as to obtain a desired basis weight or thickness. When the shape stability of the non-woven fabric structure made of the sea-island type fibers and the denseness of the fibers are insufficient, or when the orientation of the sea-island type fibers of the non-woven fabric structure in the thickness direction is adjusted, a mechanical entanglement treatment is performed by a known method such as a needle punching method. As a result, the fibers constituting the fiber web, in particular, the fibers between adjacent layers of the wrapped or stacked layered fiber web are three dimensionally entangled.

When the entanglement treatment is performed by the needle punching method, various treatment conditions such as the type of needle (the shape and count of the needle, the shape and depth of the barb, the number and position of the barb, and the like), the number of needle punches (the needle punching treatment density per unit area obtained by multiplying the density of the needle implanted in the needle board by the number of strokes of the board acting on the fiber web per unit area), and the needle punching depth (the depth at which the needle acts on the fiber web) are appropriately selected and performed.

Examples of the entanglement treatment include a method such as needle punching or high-pressure water jet treatment under the condition that at least one or more barbs penetrate simultaneously or alternately from both surfaces of a product having a desired basis weight and thickness. In addition, the punching density of the needle punching treatment is preferably 1,500 to 5,500 punches/cm$^2$, and more preferably 2,000 to 5,000 punches/cm$^2$ from the viewpoint of easily obtaining high abrasion resistance. When the punching density is within the above range, insufficient entanglement is suppressed to prevent forming a rough surface due to fraying of fibers on the surface of the artificial leather base material, and cutting of the fibers is suppressed to prevent a decrease in the degree of entanglement.

In addition, an oil agent or an antistatic agent may be applied to the fiber web at any stage from the spinning step of the sea-island type composite fiber to the entanglement treatment. Further, if necessary, the entangled state of the fiber web may be densified in advance by performing a shrinkage treatment in which the fiber web is immersed in warm water at about 70 to 150°C. The basis weight of the entangled web obtained by entangling the fiber web is preferably in the range of about 100 to 2,000 g/m². Further, if necessary, the entangled web may be subjected to a treatment for further increasing the fiber density and the degree of entanglement by heat shrinkage. In addition, for the purpose of further densifying the entangled fiber sheet densified by the heat shrinkage treatment, fixing the form of the entangled fiber sheet, smoothing the surface, and the like, the fiber density may be further increased by performing a hot press treatment as necessary.

The average diameter of the polyamide fibers is preferably 7.5 μm or less, more preferably 6.0 μm or less, still more preferably 5.5 μm or less, even more preferably 5.0 μm or less, yet still more preferably 4.5 μm or less, and particularly preferably 4.0 μm or less, from the viewpoint of easily obtaining a napped artificial leather having an elegant appearance and a good texture. The lower limit is not particularly limited, and is, for example, 1.0 μm or 1.5 μm from the viewpoint of ease of production and color developability. In other words, the average diameter of the polyamide fibers is preferably 1.0 μm or more and 7.5 μm or less, and more preferably 1.0 to 6.0 μm.

The average fineness of the polyamide fibers is preferably 0.50 dtex or less, more preferably 0.40 dtex or less, still more preferably 0.30 dtex or less, and even more preferably 0.20 dtex or less, from the viewpoint of easily obtaining a napped artificial leather having an elegant appearance and a good texture. The lower limit is not particularly limited, and is, for example, 0.01 dtex or 0. 02 dtex or more from the viewpoint of ease of production and color developability. In other words, the average fineness of the polyamide fibers is preferably 0.01 dtex or more and 0.50 dtex or less, and more preferably 0.01 to 0.40 dtex.

The "average diameter" and the "average fineness" are values obtained by measuring the cross-sectional areas of a plurality of randomly selected fibers in an enlarged photograph of the cross section of the polyamide fiber, and calculating the average diameter and the average fineness based on the measured values, and are specifically measured by the procedure described in the Examples.

<Elastic Polymer>

The elastic polymer may be any of those conventionally used in base materials for artificial leathers, and specific examples thereof include polyurethane elastomers, acrylonitrile elastomers, olefin elastomers, polyester elastomers, and acrylic elastomers, with polyurethane elastomers and acrylic elastomers being preferred.

Examples of the polyurethane elastomer include various polyurethane elastomers obtained by combining, as a main component, at least one polymer polyol having an average molecular weight of 500 to 3,000 selected from polyester diol, polyether diol, polyether ester diol, polycarbonate diol, polycarbonate ether diol, polycarbonate ester diol, and the like and at least one polyisocyanate selected from aromatic, alicyclic, and aliphatic diisocyanates such as 4,4'-diphenylmethane diisocyanate, isophorone diisocyanate, and hexamethylene diisocyanate, further combining at least one low molecular weight compound having two or more active hydrogen atoms such as ethylene glycol and ethylenediamine at a predetermined molar ratio, and subjecting these to a polymerization reaction in one stage or multiple stages by a melt polymerization method, a bulk polymerization method, a solution polymerization method, or the like.

The content of the polymer polyol component in the polyurethane elastomer is preferably 15 to 90% by mass.

Examples of the acrylic elastomer include various acrylic elastomers obtained by polymerizing: at least one soft component selected from the group consisting of monomers whose homopolymers have a glass transition temperature in the range of -90 to -5°C and are preferably non-crosslinkable, such as methyl acrylate, n-butyl acrylate, isobutyl acrylate, isopropyl acrylate, n-hexyl (meth)acrylate, and 2-ethylhexyl (meth)acrylate; at least one hard component selected from the group consisting of monomers whose homopolymers have a glass transition temperature in the range of 50 to 250°C and are preferably non-crosslinkable, such as methyl methacrylate, ethyl methacrylate, isopropyl methacrylate, isobutyl methacrylate, cyclohexyl methacrylate, and (meth)acrylic acid; and a compound capable of forming a crosslinked structure by reacting with a monofunctional or polyfunctional ethylenically unsaturated monomer unit capable of forming a crosslinked structure or an ethylenically unsaturated monomer unit introduced into a polymer chain, for example, an ethylenically unsaturated monomer composed of at least one crosslinkable component selected from the group consisting of ethylene glycol di(meth)acrylate, triethylene glycol di(meth)acrylate, polyethylene glycol di(meth)acrylate, and 1,4-butanediol di(meth)acrylate.

A base material for artificial leather obtained by employing a polyurethane elastomer as a main elastic polymer is preferable in that it is excellent in the balance of texture and mechanical properties, and further excellent in the balance including durability. In addition, a base material for artificial leather obtained by employing an acrylic elastomer is not suitable for forming a napped artificial leather because the acrylic elastomer has lower adhesiveness to ultrafine fiber bundles than a polyurethane elastomer and is poor in napping fixing effect at the time of napping formation, but is particularly preferable in the case of forming a grained artificial leather because the degree of curing of the texture with respect to the content is suppressed.

As the elastic polymer, different types may be mixed and contained, or different types may be contained separately at a plurality of times, and in addition to the elastic polymer as a main component such as the polyurethane elastomer, the acrylonitrile elastomer, the olefin elastomer, the polyester elastomer, and the acrylic elastomer described above, an elastic polymer such as a synthetic rubber may be added as necessary and contained as an elastic polymer composition.

The content of the elastic polymer with respect to the total mass of the polyamide fiber and the elastic polymer is preferably 5 to 45% by mass, more preferably 7 to 40% by mass, and still more preferably 8 to 30% by mass from the viewpoint of easily obtaining the texture of the artificial leather.

<Other Component>

The artificial leather base material may or may not contain a component other than the polyamide fiber and the elastic polymer. Examples of such other component include other components contained in the above-described polyamide resin and various additives that can be added to the elastic polymer liquid, which will be described in Step (4) described later. The other component may be included in at least one of the polyamide fiber and the elastic polymer.

The content of the other component is preferably 0.5 to 10.0% by mass, more preferably 1.0 to 5.0% by mass, and still more preferably 1.5 to 3.0% by mass with respect to the mass of the artificial leather base material from the viewpoint of facilitating the expression of the desired effect of the other component and facilitating the securement of the shape stability of the artificial leather base material when wetted with water.

[Method for Producing Artificial Leather Base Material]

The method for producing an artificial leather base material of the present embodiment includes the following steps (1) to (5).

- Step (1): a step of spinning an ultrafine fiber-generating fiber using a water-soluble thermoplastic resin and a polyamide resin to which an olefin-maleic anhydride resin is added.
- Step (2): a step of preparing a fiber web formed from the ultrafine fiber-generating fiber.
- Step (3): a step of forming an entangled fiber sheet using the fiber web.
- Step (4): a step of impregnating the entangled fiber sheet with an elastic polymer.
- Step (5): a step of removing the water-soluble thermoplastic resin from the ultrafine fiber-generating fiber at any time from before the impregnation to after the impregnation of the elastic polymer.

In the method for producing an artificial leather base material, since the ultrafine fiber-generating fiber is spun using a water-soluble thermoplastic resin and a polyamide resin to which an olefin-maleic anhydride resin is added in the step (1), the water-soluble thermoplastic resin can be removed from the ultrafine fiber-generating fiber with an aqueous solution in the step (5). In addition, by preparing an entangled fiber sheet in the steps (1) to (3) and impregnating the entangled fiber sheet with the elastic polymer in the step (4), the elastic polymer can be contained in the polyamide fibers. Therefore, an organic solvent is not required for removing at least the sea component, so that an environment-friendly production method can be provided, and when an aqueous elastic polymer capable of forming an emulsion using an aqueous solvent such as water as a dispersion medium is used as the elastic polymer, a further environment-friendly production method can be provided. Further, in the step (1), since the olefin-maleic anhydride resin, which has excellent compatibility with the polyamide resin and is also a hydrophobic component, is added to the polyamide resin, spinning stability is easily secured, and a large amount of the $\gamma$-type crystal structure is easily present in the polyamide resin constituting the polyamide fiber, and the relationship of $0.690 \leq \gamma/\alpha \leq 1.100$ is easily satisfied. As a result, an artificial leather base material having excellent shape stability when wetted with water can be obtained.

Hereinafter, each step included in the method for producing an artificial leather base material will be described.

<Step (1)>

As described above, the step (1) is a step of spinning an ultrafine fiber-generating fiber using a water-soluble thermoplastic resin and a polyamide resin to which an olefin-maleic anhydride resin is added.

The specific procedures of the step (1) are as described in the section of "<Polyamide Fiber>" above.

<Step (2)>

As described above, the step (2) is a step of preparing a fiber web formed from the ultrafine fiber-generating fiber.

Other specific procedures of the step (2) are as described in the section of "<Polyamide Fiber>" above.

<Step (3)>

As described above, the step (3) is a step of forming an entangled fiber sheet using the fiber web.

Other specific procedures of the step (3) are as described in the section of "<Polyamide Fiber>" above.

<Step (4)>

As described above, the step (4) is a step of applying the elastic polymer to the entangled fiber sheet.

In the production of the napped artificial leather, in order to impart shape stability and richness feeling, an elastic polymer is imparted, for example, by impregnation, to an entangled fiber sheet obtained by entangling sea-island type composite fibers before removal of the sea component. As described above, by impregnating the elastic polymer into the entangled fiber sheet in which the sea-island type composite fibers are entangled before the sea component is removed, voids formed by removing the sea component are formed between the ultrafine fibers forming the fiber bundle after the sea component is removed. As a result, since the ultrafine fibers are not constrained by the elastic polymer, a napped artificial leather having a soft texture is obtained. When the elastic polymer is impregnated into the non-woven fabric of the ultrafine fibers forming the fiber bundles after the sea component is removed from the sea-island type composite fibers, the elastic polymer penetrates into the voids of the fiber bundles, whereby the ultrafine fibers forming the fiber bundles are constrained by the elastic polymer, and a napped artificial leather having a hard texture is obtained.

In at least one of the stages before the removal of the sea component and after the removal of the sea component, the entangled fiber sheet is impregnated with an elastic polymer liquid such as a dispersion liquid of the elastic polymer, and then the elastic polymer is solidified by a conventionally known dry method or wet method to fix the elastic polymer in the entangled fiber sheet. The dry method as used herein refers to all methods of fixing the elastic polymer in the fiber sheet structure by removing the solvent or the dispersant by drying or the like. Further, the wet method as used herein refers to all methods of temporarily fixing or completely fixing the elastic polymer in the non-woven fabric structure before removing the dispersant by treating the entangled fiber sheet structure impregnated with the elastic polymer liquid with a non-solvent for the elastic polymer or a coagulant, or by heat-treating the non-woven fabric structure after impregnation by adopting an aqueous elastic polymer liquid to which a thermosensitive gelling agent or the like is added.

When the elastic polymer is applied to the entangled fiber sheet, a non-aqueous elastic polymer liquid in which the elastic polymer is dissolved or dispersed in a solvent may be used, or an aqueous elastic polymer liquid in which the elastic polymer is dispersed in an aqueous medium together with a dispersant as necessary may be used. In the former case, a uniform elastic polymer liquid is easily obtained, and in the latter case, the amount of the organic solvent to be used is easily reduced.

In order to completely fix the coagulated elastic polymer, it is also preferable to perform a curing treatment such as a heating treatment after removing the solvent or the dispersant.

The concentration of the elastic polymer liquid, that is, the content of the elastic polymer in the elastic polymer liquid is preferably 0.1 to 60% by mass.

The elastic polymer liquid may be appropriately blended with various additives blended in an elastic polymer liquid to be contained in a conventional base material for artificial leather, such as a colorant such as a dye or a pigment, a coagulation regulator, an antioxidant, an ultraviolet absorber, a fluorescent agent, a fungicide, a penetrant, an antifoaming agent, a lubricant, a water repellent, an oil repellent, a thickener, an extender, a curing accelerator, a foaming agent, and a water-soluble polymer compound such as polyvinyl alcohol or carboxymethyl cellulose, as long as the properties of the base material for artificial leather to be finally obtained are not impaired.

Details of the elastic polymer used in the step (4) are as described in the section of "<Elastic Polymer>" above.

<Step (5)>

The step (5) is a step of removing the water-soluble thermoplastic resin from the ultrafine fiber-generating fiber at any time from before the impregnation to after the impregnation of the elastic polymer.

As a method of removing the sea component polymer from the sea-island type fibers constituting the entangled fiber sheet structure before or after the elastic polymer is contained, a method of treating the non-woven fabric structure with a liquid which is a non-solvent or a non-decomposer for the island component polymer, and in the case of removing the sea component polymer after the elastic polymer is contained, a liquid which is also a non-solvent or a non-decomposer for the elastic polymer, and is a solvent or a decomposer for the sea component polymer can be adopted.

For example, when polyvinyl alcohol which is a water-soluble thermoplastic resin as described above is used as the sea component polymer, it may be removed with warm water at a temperature at which the polymer is soluble, and when an easily alkali-decomposable modified polyester obtained by copolymerizing a compound containing an alkali metal salt of sulfonic acid as described above is used as the sea component polymer, it may be removed using an aqueous solution which is an alkaline decomposer such as an aqueous sodium hydroxide solution at an appropriate temperature.

By such a sea component polymer removing treatment, the sea-island type fibers are modified into ultrafine fiber bundles composed of the island component polymer, whereby a base material for artificial leather having a basis weight of preferably 300 to 1,800 g/m$^2$ is obtained.

<Step (6)>

The method for producing an artificial leather base material of the present embodiment preferably further includes a step of dyeing the artificial leather base material (step (6)). The step (6) can be performed at any stage after the sea-island type fibers are modified into ultrafine fiber bundles.

In the step (6), any dyeing method using a known dyeing machine usually used for dyeing conventional artificial leather, such as a padder, a jigger, a circular, or a wince, using a dye mainly composed of a disperse dye, a reactive dye, an acid dye, a metal complex salt dye, a sulfur dye, a sulfur vat dye, or the like, which is appropriately selected depending on the type of fiber, can be adopted.

In addition to dyeing, if necessary, it is also preferable to perform finishing treatments such as a mechanical rubbing treatment in a dry state, a relaxation treatment in a wet state using a dyeing machine, a washing machine, or the like, a softening agent treatment, a function-imparting treatment using an anti-combustion agent, an antibacterial agent, a deodorant, a water- and oil-repellent agent, or the like, a tactile feeling modifier-imparting treatment using a silicone-based resin, a silk protein-containing treatment agent, a grip property-imparting resin, or the like, and a design property-imparting treatment of applying a resin other than the above-described resins, such as a colorant or an enamel coating resin.

[Napped Artificial Leather]

A napped artificial leather according to an embodiment of the present invention is a napped artificial leather obtained by napping a surface of any of the above-described artificial leather base materials. Such a napped artificial leather is excellent in shape stability when wetted with water, and can combine soft surface touch, excellent napped appearance, and mechanical properties.

As for the napped artificial leather, the base material for artificial leather obtained according to the above-described method for producing a base material for artificial leather is sliced into a plurality of pieces in the thickness direction as necessary, and the thickness is adjusted by grinding the surface to be the back surface, or the surface to be the back surface or the surface to be the front surface is treated with a liquid containing a solvent for the elastic polymer or the ultrafine fiber bundle, in the same manner as in the conventional artificial leather production. Next, at least the surface to be the front surface is raised by a method such as buffing to form a fiber napped surface mainly composed of ultrafine fibers. In this manner, a napped artificial leather having a suede-like or nubuck-like appearance is obtained.

The napped fiber surface may be formed by using any known method, such as buffing with sandpaper or card clothing, or brushing. Before or after the raising treatment, a solvent capable of dissolving or swelling the elastic polymer or the ultrafine fiber bundle, for example, a treatment liquid containing dimethylformamide (DMF) or the like when the elastic polymer is a polyurethane elastomer, or a treatment liquid containing a phenol-based compound such as resorcin when the ultrafine fiber bundle is a polyamide-based resin may be applied to the surface to be raised. This makes it possible to finely adjust the constraint state of the ultrafine fiber bundle by the adhesion of the elastic polymer or the ultrafine fiber bundle, the ultrafine fiber nap length of the napped artificial leather, the surface friction durability, and the like.

After the raising treatment, the above-described step (6) may be performed to obtain a dyed napped artificial leather.

In this manner, the napped artificial leather of the present embodiment is obtained. When the polyamide fibers contained in the napped artificial leather have an average diameter of 7.5 $\mu$m or less or an average fineness of 0.50 dtex or less as described above, an elegant napped appearance is likely to be obtained, and as a result, a napped artificial leather having an elegant napped appearance, shape stability when wetted with water, and a soft surface touch is obtained.

Examples

Hereinafter, the present invention will be described in more detail with reference to Examples. It should be noted that the scope of the present invention is not limited by the contents of the examples.

First, evaluation methods used in Examples and Comparative Examples to be described later will be collectively described below.

<Average Diameter>

The average diameter of the polyamide fibers was measured as follows. A scanning electron microscope (SEM) photograph of a cross section of the napped artificial leather was taken at a magnification of 3,000 times. Then, ten cross sections of the fibers were randomly selected from the SEM photograph, and the cross-sectional areas were measured. The arithmetic average value of the cross-sectional areas was calculated, and the value calculated based on the following Equation (1) was taken as the average diameter of the polyamide fiber.

$$\text{Average diameter} = (\text{average cross-sectional area}/\pi)^{1/2} \times 2 \qquad \text{Equation (1).}$$

<Average Fineness>

The average fineness of the polyamide fiber was measured as follows. A scanning electron microscope (SEM) photograph of a cross section of the napped artificial leather was taken at a magnification of 3,000 times. Then, ten cross sections of the fibers were randomly selected from the SEM photograph to measure the cross-sectional area, and the arithmetic average value of the cross-sectional areas was calculated. Then, the average value of the cross-sectional areas was converted into an average fineness using the density of the polyamide resin.

<Content of Elastic Polymer>

The mass C of the artificial leather base material cut out into a size having a mass of 1 g or more was measured.
When the elastic polymer was dissolved in N,N-dimethylformamide (DMF), the artificial leather base material was immersed in 300 mL of DMF at room temperature for 5 hours and then squeezed to remove the DMF, and the DMF obtained by squeezing was placed in water, and a step of immersing in DMF and squeezing while replacing the DMF under the same conditions until the water was no longer turbid was repeated to remove the elastic polymer from the artificial leather base material. The polyamide fiber which was a residue obtained by removing the elastic polymer from the artificial leather base material was dried to remove DMF, and the mass D of the polyamide fiber after drying was measured. Then, the content of the elastic polymer in the artificial leather base material was obtained based on the following Equation (2).

$$\text{Content (\% by mass) of the elastic polymer} = (C - D)/C \times 100 \qquad \text{Equation (2).}$$

When the elastic polymer was not dissolved in DMF, the artificial leather base material was immersed in 300 mL of hexafluoro-2-propanol (HFIP) at room temperature for 12 hours to dissolve the polyamide fiber, the remaining solid content was filtered, and the solid content was washed with HFIP and then dried to remove HFIP, and the mass E of the obtained solid was measured. Then, the content of the elastic polymer in the artificial leather base material was obtained based on the following Equation (3).

$$\text{Content (\% by mass) of elastic polymer} = E/C \times 100 \qquad \text{Equation (3).}$$

<Apparent Density>

The obtained artificial leather base material was cut into a size of 16 cm × 16 cm (256 cm$^2$). The mass (g) of the cut artificial leather was measured, and the basis weight (g/m$^2$) of the cut artificial leather base material was calculated by the following Equation (4).

$$\text{Basis weight} = \text{mass}/256 \times 10000 \qquad \text{Equation (4).}$$

In accordance with JIS L1096 (2010) (A method), the thickness (mm) of the cut artificial leather base material was measured using a thickness measuring device (probe diameter: 10 mm) under a constant pressure of 23.5 kPa for 5 seconds, and the apparent density (g/cm$^3$) of the artificial leather base material was calculated in accordance with JIS K6505 (1995) 5.2.2 by the following Equation (5).

$$\text{Apparent density} = \text{basis weight}/\text{thickness}/1000 \qquad \text{Equation (5).}$$

<Melting Point>

The melting point of the resin was determined by using a thermal analyzer "DSC-60A" manufactured by Shimadzu Corporation, raising the temperature to 400°C at a temperature rising rate of 10°C/min under a nitrogen atmosphere, and taking the exothermic peak temperature as the melting point.

<Tear Strength>

A test piece of vertical 10 cm × horizontal 4 cm was cut out from the obtained artificial leather base material. Then, at the center of the short side of the test piece, a 5 cm cut was made in parallel to the long side. Then, using a tensile tester, each cut piece was sandwiched between chucks of a jig, and an s-s curve was measured at a tensile speed of 10 cm/min. Three pieces of each test piece were measured in the vertical direction and the horizontal direction perpendicular to the vertical direction of the artificial leather base material, and the average value thereof was obtained as the tear strength.

<Water Absorption Area Swelling Ratio>

A test piece of vertical 5 cm × horizontal 5 cm was cut out from the obtained artificial leather base material. Then, the test piece was immersed in water and press-treated so that the pick-up rate of water became 50%, the vertical size G (cm) and the horizontal size H (cm) were measured, and the water absorption area swelling ratio was determined from the following Equation (6).

$$\text{Water absorption area swelling ratio } (\%) = [G \times H - 5 \times 5]/[5 \times 5] \times 100 \qquad \text{Equation (6).}$$

<Crystal Structure Analysis>

Polyamide fibers were taken out from the obtained napped artificial leather by a method of dissolving the elastic polymer, and in a case where it is difficult to dissolve the elastic polymer, the polyamide fibers were taken out by a method of cutting out with scissors, and used as a sample for crystal structure analysis.

D8 Discover I$\mu$S was used as a wide-angle X-ray apparatus, two dimensional PSPC VANTEC-500 (both manufactured by Bruker Corporation) was used as a detector, and Cu was used as an X-ray source, and a measurement profile at 2θ of 5° to 35° was acquired for the sample. Next, measurement data obtained by performing the same measurement in a state without a sample was set as blank data, and data obtained by subtracting the blank data from the above-described measurement profile was set as analysis data. Next, a line formed by connecting both ends of 2θ = 5° and 35° with a straight line was set as a baseline, a peak intensity of a diffraction peak at 2θ = 21.3° $\pm$ 0.2°C corresponding to a γ-type crystal was set as y, and a peak intensity of a diffraction peak at 2θ = 20.1° $\pm$ 0.2°C corresponding to an α-type crystal was set as α. Then, the value of γ/α was calculated.

<Surface Tactile Feeling>

The feel of the surface of the obtained napped artificial leather was evaluated according to the following criteria.

A: The tactile feeling when the surface was stroked was smooth and soft.
B: The tactile feeling when the surface was stroked was smooth but was less soft than "A".

<Modification Amount>

The modification amount of the olefin-maleic anhydride resins was calculated from a separately prepared calibration curve based on the peak intensity at a wave number of 1780 cm$^{-1}$ assigned to carbonyl groups in measurement by Fourier transform infrared spectroscopy (FTIR).

[Example 1]

A modified polyvinyl alcohol-based resin which is a water-soluble thermoplastic resin as a sea component and polyamide 6 to which an olefin-maleic anhydride resin (Lotarder 4210, maleic anhydride modification amount of 3.6 mol%, melting point of 105°C, butyl acrylate modified amount of 6.5 mol%) (manufactured by SK Geo Centric Co., Ltd.) as an island component was added so as to account for 10% by mass of the whole were discharged from a spinneret for melt composite spinning (number of islands: 25 islands/fiber) at 260°C so that the sea component/island component was 30/70 (mass ratio), and spinning was performed at a spinning speed of 3,500 m/min, thereby obtaining a fiber web containing sea-island type composite fibers having an average fineness of 2.71 dtex.

Next, the fiber webs were laminated to form a laminated web. The laminated web was then needle-punched with needles having 1 barb and 6 barbs at a punching density of 3,500 P/cm$^2$ to form an entangled fiber sheet having a basis weight of 620 g/m$^2$.

Next, the entangled fiber sheet was subjected to steam treatment under the conditions of 110°C and 23.5% RH. Then, the entangled fiber sheet was dried in an oven at a temperature of 90°C to 110°C and further subjected to hot pressing at 120°C, thereby obtaining a hot-pressed fiber sheet having a basis weight of 625 g/m$^2$, a specific gravity of 0.50 g/cm$^3$, and a thickness of 1.25 mm.

Next, 1.5 parts by mass of a carbodiimide-based crosslinking agent and 2.7 parts by mass of ammonium sulfate were added to an emulsion of a polycarbonate-based non-yellowing polyurethane as an elastic polymer with respect to 100 parts by mass of the elastic polymer, and the emulsion in which the solid content of the elastic polymer was 15% by mass was impregnated into the hot-pressed fiber sheet at a pick up rate of 52%, and the solid content of the elastic polymer was adjusted to 10% by mass with respect to the total of the polyamide fibers and the elastic polymer in the hot-pressed fiber sheet. The hot-pressed fiber sheet impregnated with the emulsion was dried at 115°C in an atmosphere of 25% RH, and further dried at 150°C to obtain a hot-pressed fiber sheet to which an elastic polymer had been applied.

Then, the hot-pressed fiber sheet to which the elastic polymer had been applied was immersed for 10 minutes in hot water at 95°C while being subjected to dip-nip treatment and high-pressure water flow treatment, thereby dissolving and removing the water-soluble thermoplastic polyvinyl alcohol-based resin, which was the sea component of the sea-island type composite fiber, and forming ultrafine fibers of polyamide 6 having an average diameter of 2.9 $\mu$m and an average fineness of 0.076 dtex. Then, an artificial leather base material was obtained by drying. Then, the artificial leather base material was half-cut at the central portion in the thickness direction, the half-cut surface side was ground using #320 paper, and the main surface of the artificial leather base material was ground using #320 and #400 paper to form a napped fiber surface.

Then, the artificial leather base material on which the napped fiber surface was formed was dyed at 90°C using a metal complex dye to obtain a napped artificial leather having a napped fiber surface. The obtained napped artificial leather had a basis weight of 262 g/m$^2$, an apparent density of 0.429 g/cm$^3$, a thickness of 0.61 mm, and a $\gamma/\alpha$ of 0.739.

The napped artificial leather of Example 1 described above could be produced by a method not using a solvent, and the water absorption area swelling ratio thereof was 10.2%, which was significantly reduced from the water absorption area swelling ratio of 18.8% of the artificial leather simply composed of polyamide 6 described in Comparative Example 1 described later. In addition, the mechanical properties were not impaired, and the surface touch was smooth and soft, and was evaluated as A. The above results are shown in Table 1 below.

[Example 2]

As shown in Table 1, a napped artificial leather was obtained in the same manner as in Example 1, except that the polyamide was changed to polyamide 6 to which an olefin-maleic anhydride resin (Lotarder 4210) (manufactured by SK Geo Centric Co., Ltd.) as an island component was added so as to account for 5% by mass of the whole. The results are shown in Table 1.

[Example 3]

As shown in Table 1, a napped artificial leather was obtained in the same manner as in Example 1, except that the polyamide was changed to polyamide 6 to which an olefin-maleic anhydride resin (Lotarder 4210) (manufactured by SK Geo Centric Co., Ltd.) as an island component was added so as to account for 3% by mass of the whole. The results are shown in Table 1.

[Example 4]

As shown in Table 1, a napped artificial leather was obtained in the same manner as in Example 1, except that the solid content of the elastic polymer was adjusted to be 15% by mass with respect to the total of the polyamide fibers and the elastic polymer in the hot-pressed fiber sheet. The results are shown in Table 1.

[Example 5]

As shown in Table 1, a napped artificial leather was obtained in the same manner as in Example 4, except that the polyamide was changed to polyamide 6 to which an olefin-maleic anhydride resin (Lotarder 3410, maleic anhydride modification amount of 3.1 mol%, melting point of 89°C, butyl acrylate modification amount of 17 mol%) (manufactured by SK Geo Centric Co., Ltd.) as an island component was added so as to account for 10% by mass of the whole. The results are shown in Table 1.

[Example 6]

As shown in Table 1, a napped artificial leather was obtained in the same manner as in Example 1, except that the solid content of the elastic polymer was adjusted to be 20% by mass with respect to the total of the polyamide fibers and the elastic polymer in the hot-pressed fiber sheet. The results are shown in Table 1.

[Example 7]

As shown in Table 2, a napped artificial leather was obtained in the same manner as in Example 1, except that the polyamide 6 (island component) and the polyvinyl alcohol-based resin (sea component) were composite-spun at a polyamide/polyvinyl alcohol-based resin = 50/50, and the elastic polymer was changed to a DMF solution of polyester-based polyurethane (solid content of 13.5% by mass), and the solid content of the elastic polymer was adjusted to 41% by mass with respect to the total of the polyamide fibers and the elastic polymer in the hot-pressed fiber sheet. The results are shown in Table 2.

[Example 8]

As shown in Table 2, a napped artificial leather was obtained in the same manner as in Example 1, except that the polyamide 6 (island component) and the polyvinyl alcohol-based resin (sea component) were composite-spun at a polyamide/polyvinyl alcohol-based resin = 50/50, and the elastic polymer was changed to a DMF solution of polyether-based polyurethane (solid content of 13.5% by mass), and the solid content of the elastic polymer was adjusted to 42% by mass with respect to the total of the polyamide fibers and the elastic polymer in the hot-pressed fiber sheet. The results are shown in Table 2.

[Example 9]

A modified polyvinyl alcohol-based resin, which is a water-soluble thermoplastic resin, as a sea component and polyamide 6 as an island component were discharged from a spinneret for melt composite spinning (number of islands: 64 islands/fiber) at 260°C so that the sea component/island component was 30/70 (mass ratio), and spinning was performed at a spinning speed of 800 m/min to obtain an undrawn sea-island type composite fiber having a diameter of 38.7 $\mu$m (fineness of 12.7 dtex).

The obtained undrawn sea-island type fiber was dry-heat drawn in a hot water bath at a drawing temperature of 100°C and a draw ratio of 3.6 times to obtain a drawn sea-island type composite fiber having a diameter of 20.4 $\mu$m (fineness of 3.54 dtex).

Subsequently, the drawn sea-island type composite fiber was crimped and cut to obtain a staple having a fiber length of 51 mm. The staple was carded, overlapped, and subjected to a needle punching treatment to form an entangled fiber sheet having a basis weight of 620 g/m$^2$.

Next, the entangled fiber sheet was subjected to steam treatment under the conditions of 110°C and 23.5% RH. Then, the entangled fiber sheet was dried in an oven at a temperature of 90°C to 110°C and further subjected to hot pressing at 120°C, thereby obtaining a hot-pressed fiber sheet.

1.5 parts by mass of a carbodiimide-based crosslinking agent and 2.7 parts by mass of ammonium sulfate were added to an emulsion of a polycarbonate-based non-yellowing polyurethane as an elastic polymer with respect to 100 parts by mass of the elastic polymer, and the emulsion in which the solid content of the elastic polymer was 15% by mass was impregnated into the hot-pressed fiber sheet at a pick up rate of 52%, and the solid content of the elastic polymer was adjusted to 10% by mass with respect to the total of the polyamide fibers and the elastic polymer in the hot-pressed fiber sheet. The hot-pressed fiber sheet impregnated with the emulsion was then dried at 115°C in an atmosphere of 25% RH, and further dried at 150°C to obtain a hot-pressed fiber sheet to which an elastic polymer had been applied.

Then, the hot-pressed fiber sheet to which the elastic polymer had been applied was immersed for 10 minutes in hot water at 95°C while being subjected to dip-nip treatment and high-pressure water flow treatment, thereby dissolving and removing the water-soluble thermoplastic polyvinyl alcohol-based resin, which was the sea component of the sea-island type composite fiber, and forming ultrafine fibers of polyamide 6 having an average diameter of 2.9 $\mu$m and an average fineness of 0.076 dtex. Then, an artificial leather base material was obtained by drying. Then, the artificial leather base material was half-cut at the central portion in the thickness direction, the half-cut surface side was ground using #320 paper, and the main surface of the artificial leather base material was ground using #320 and #400 paper to form a napped fiber surface.

Then, the artificial leather base material on which the napped fiber surface was formed was dyed at 90°C using a metal complex dye to obtain a napped artificial leather having a napped fiber surface. The obtained napped artificial leather had a basis weight of 252 g/m$^2$, an apparent density of 0.420 g/cm$^3$, and a thickness of 0.60 mm, and $\gamma/\alpha$ of the napped

artificial leather was 0.737.

The napped artificial leather of Example 9 described above could be produced by a method not using a solvent, and the water absorption area swelling ratio thereof was 5.2%, which was significantly reduced from the water absorption area swelling ratio of 26.7% of the artificial leather composed of polyamide 6 having a low draw ratio described in Comparative Example 4 described later. In addition, the mechanical properties were not impaired, and the surface touch was smooth and soft, and was evaluated as A. The above results are shown in Table 2 below.

[Comparative Example 1]

As shown in Table 2, a napped artificial leather was obtained in the same manner as in Example 1, except that the island component was changed to polyamide 6 to which the olefin-maleic anhydride resin was not added. The results are shown in Table 2.

[Comparative Example 2]

As shown in Table 2, a napped artificial leather was obtained in the same manner as in Example 1, except that (i) polyethylene was used as the sea component and polyamide 6 to which an olefin-maleic anhydride resin (Lotarder 4210) (manufactured by SK Geo Centric Co., Ltd.) was not added was used as the island component, (ii) polyamide 6 (island component) and polyethylene (sea component) were mixed and spun at a polyamide/polyethylene ratio of 50/50 (mass ratio) and then subjected to drawing treatment, and (iii) the solid content of the elastic polymer was changed to 46% by mass. The results are shown in Table 2.

[Comparative Example 3]

As shown in Table 2, a napped artificial leather was obtained in the same manner as in Example 1, except that polyethylene terephthalate (hereinafter referred to as PET) to which an olefin-maleic anhydride resin (Lotarder 4210) (manufactured by SK Geo Centric Co., Ltd.) was not added was used as an island component. The results are shown in Table 2.

[Comparative Example 4]

A napped artificial leather was obtained in the same manner as in Example 9 except that the draw ratio was changed to 1.3 times. The results are shown in Table 2.

[Table 1]

Table 1

| Example/Comparative Example No. | | | Example 1 | Example 2 | Example 3 |
|---|---|---|---|---|---|
| Sea component | Resin | Kind | Modified polyvinyl alcohol | Modified polyvinyl alcohol | Modified polyvinyl alcohol |
| | | Dissolution solvent | Water | Water | Water |
| | | Melting point (°C) | 217 | 217 | 217 |

(continued)

| Example/Comparative Example No. | | | | Example 1 | Example 2 | Example 3 |
|---|---|---|---|---|---|---|
| Island component | (X) Main resin | Kind | | Polyamide 6 | Polyamide 6 | Polyamide 6 |
| | | Melting point (°C) | | 225 | 225 | 225 |
| | | Average diameter ($\mu$m) | | 2.9 | 2.7 | 2.8 |
| | | Average fineness (dtex) | | 0.076 | 0.067 | 0.069 |
| | (Y) Olefin-maleic anhydride resin | Maleic anhydride modification amount (mol%) | | 3.6 | 3.6 | 3.6 |
| | | Third modifying component | | Butyl acrylate | Butyl acrylate | Butyl acrylate |
| | | Third modifying component modification amount (mol%) | | 6.5 | 6.5 | 6.5 |
| (Y)/[(X) + (Y)] (%) | | | | 10 | 5 | 3 |
| Fiber length | | | | Long fiber | Long fiber | Long fiber |
| Elastic polymer | | Kind | | Polycarbonate-based polyurethane | Polycarbonate-based polyurethane | Polycarbonate-based polyurethane |
| | | Content ratio (% by mass) | | 10 | 10 | 10 |
| Apparent density (g/cm$^3$) | | | | 0.423 | 0.449 | 0.428 |
| $\gamma/\alpha$ of polyamide fiber | | | | 0.739 | 0.705 | 0.692 |
| Tear strength (kg) | | Vertical | | 2.9 | 2.3 | 3.1 |
| | | Horizontal | | 4.3 | 4.0 | 4.3 |
| Water absorption area swelling ratio (%) | | | | 10.2 | 12.4 | 12.4 |
| Surface tactile feeling | | | | A | A | A |
| Example/Comparative Example No. | | | | Example 4 | Example 5 | Example 6 |
| Sea component | Resin | Kind | | Modified polyvinyl alcohol | Modified polyvinyl alcohol | Modified polyvinyl alcohol |
| | | Dissolution solvent | | Water | Water | Water |
| | | Melting point (°C) | | 217 | 217 | 217 |
| Island component | (X) Main resin | Kind | | Polyamide 6 | Polyamide 6 | Polyamide 6 |
| | | Melting point (°C) | | 225 | 225 | 225 |
| | | Average diameter ($\mu$m) | | 2.6 | 2.8 | 2.6 |
| | | Average fineness (dtex) | | 0.060 | 0.068 | 0.060 |
| | (Y) Olefin-maleic anhydride resin | Maleic anhydride modification amount (mol%) | | 3.6 | 3.1 | 3.6 |
| | | Third modifying component | | Butyl acrylate | Butyl acrylate | Butyl acrylate |
| | | Third modifying component modification amount (mol%) | | 6.5 | 17 | 6.5 |
| (Y)/[(X) + (Y)] (%) | | | | 10 | 10 | 10 |
| Fiber length | | | | Long fiber | Long fiber | Long fiber |

(continued)

| Example/Comparative Example No. | | Example 4 | Example 5 | Example 6 |
|---|---|---|---|---|
| Elastic polymer | Kind | Polycarbonate-based polyurethane | Polycarbonate-based polyurethane | Polycarbonate-based polyurethane |
| | Content ratio (% by mass) | 15 | 15 | 20 |
| Apparent density (g/cm$^3$) | | 0.475 | 0.476 | 0.442 |
| $\gamma/\alpha$ of polyamide fiber | | 0.739 | 0.735 | 0.720 |
| Tear strength (kg) | Vertical | 3.0 | 2.9 | 2.0 |
| | Horizontal | 4.8 | 5.3 | 3.3 |
| Water absorption area swelling ratio (%) | | 10.2 | 10.2 | 8.2 |
| Surface tactile feeling | | A | A | A |

[Table 2]

Table 2

| Example/Comparative Example No. | | | Example 7 | Example 8 | Example 9 | Comparative Example 1 |
|---|---|---|---|---|---|---|
| Sea component | Resin | Kind | Modified polyvinyl alcohol | Modified polyvinyl alcohol | Modified polyvinyl alcohol | Modified polyvinyl alcohol |
| | | Dissolution solvent | Water | Water | Water | Water |
| | | Melting point (°C) | 217 | 217 | 217 | 217 |
| Island component | (X) Main resin | Kind | Polyamide 6 | Polyamide 6 | Polyamide 6 | Polyamide 6 |
| | | Melting point (°C) | 225 | 225 | 225 | 225 |
| | | Average diameter ($\mu$m) | 2.6 | 2.6 | 2.1 | 2.5 |
| | | Average fineness (dtex) | 0.060 | 0.060 | 0.039 | 0.057 |
| | (Y) Olefin-maleic anhydride resin | Maleic anhydride modification amount (mol%) | 3.6 | 3.6 | - | - |
| | | Third modifying component | Butyl acrylate | Butyl acrylate | | |
| | | Third modifying component modification amount (mol%) | 6.5 | 6.5 | - | - |
| (Y)/[(X) + (Y)] (%) | | | 10 | 10 | - | 0 |
| Fiber length | | | Long fiber | Long fiber | Short fiber | Long fiber |

(continued)

| Example/Comparative Example No. | | Example 7 | Example 8 | Example 9 | Comparative Example 1 |
|---|---|---|---|---|---|
| Elastic polymer | Kind | Ester-based polyurethane | Ether-based polyurethane | Polycarbonate-based polyurethane | Polycarbonate-based polyurethane |
| | Content ratio (% by mass) | 41 | 42 | 10 | 10 |
| Apparent density (g/cm³) | | 0.376 | 0.385 | 0.420 | 0.431 |
| $\gamma/\alpha$ of polyamide fiber | | 0.730 | 0.724 | 0.737 | 0.674 |
| Tear strength (kg) | Vertical | 2.0 | 2.1 | 3.0 | 3.7 |
| | Horizontal | 3.0 | 2.1 | 4.0 | 5.1 |
| Water absorption area swelling ratio (%) | | 11.0 | 10.5 | 5.2 | 18.8 |
| Surface tactile feeling | | A | A | A | A |

Table 2 (continued)

| Example/Comparative Example No. | | | Comparative Example 2 | Comparative Example 3 | Comparative Example 4 |
|---|---|---|---|---|---|
| Sea component | Resin | Kind | Polyethylene | Modified polyvinyl alcohol | Modified polyvinyl alcohol |
| | | Dissolution solvent | Toluene | Water | Water |
| | | Melting point (°C) | 110 | 217 | 217 |
| Island component | (X) Main resin | Kind | Polyamide 6 | PET | Polyamide 6 |
| | | Melting point (°C) | 225 | 240 | 225 |
| | | Average diameter ($\mu$m) | 0.9 | 2.9 | 3.5 |
| | | Average fineness (dtex) | 0.0073 | 0.095 | 0.11 |
| | (Y) Olefin-maleic anhydride resin | Maleic anhydride modification amount (mol%) | - | - | - |
| | | Third modifying component | | | |
| | | Third modifying component modification amount (mol%) | | | |
| (Y)/[(X) + (Y)] (%) | | | 0 | 0 | - |
| Fiber length | | | Short fiber | Long fiber | Short fiber |
| Elastic polymer | Kind | | Polycarbonate-based polyurethane | Polycarbonate-based polyurethane | Polycarbonate-based polyurethane |
| | Content ratio (% by mass) | | 46 | 10 | 10 |
| Apparent density (g/cm³) | | | 0.293 | 0.426 | 0.410 |
| $\gamma/\alpha$ of polyamide fiber | | | 1.219 | - | 0.620 |
| Tear strength (kg) | Vertical | | 3.6 | 2.8 | 1.5 |
| | Horizontal | | 3.0 | 4.0 | 1.8 |
| Water absorption area swelling ratio (%) | | | 10.2 | 0 | 26.7 |

(continued)

| Example/Comparative Example No. | Comparative Example 2 | Comparative Example 3 | Comparative Example 4 |
|---|---|---|---|
| Surface tactile feeling | A | B | B |

Referring to Tables 1 and 2, it can be seen that each of the napped artificial leathers obtained in Examples 1 to 9 has an area swelling ratio of less than 13% when wetted with water, is excellent in shape stability, and has a smooth and soft surface touch peculiar to the polyamide resin.

On the other hand, in Comparative Example 1 in which the olefin-maleic anhydride resin was not added, the area swelling ratio when wetted with water showed a numerical value exceeding 18%, and it can be seen that the shape stability was lacking.

In addition, in Comparative Example 2 in which polyethylene as the sea component and polyamide 6 as the island component were mixed and spun, followed by drawing treatment, the area swelling ratio when wetted with water was low, and the shape stability was excellent, but a solvent had to be used in order to remove the sea component, and it can be seen that Comparative Example 2 lacks environmental compatibility.

Further, in Comparative Example 3 in which PET was used as the resin constituting the island component, the area swelling ratio when wetted with water is 0%, and the shape stability is excellent, but the surface tactile feeling is different from the softness peculiar to polyamide, and it can be seen that the surface tactile feeling is inferior to those of Examples.

Furthermore, in Comparative Example 4 in which composite spinning was performed using a modified polyvinyl alcohol-based resin which is a water-soluble thermoplastic resin as the sea component and polyamide 6 as the island component, and then a weak drawing treatment was performed, $\gamma/\alpha$ of the polyamide fiber is less than 0.690, and the area swelling ratio when wetted with water showed a numerical value exceeding 26%, and it can be seen that the shape stability was lacking.

Industrial Applicability

The artificial leather of the present invention has excellent shape stability when wetted with water. In addition, since the polyamide fiber is contained, a soft surface touch and an excellent texture are provided. Therefore, it can be suitably used for products such as automobile parts, information equipment-related parts, household appliance-related parts, optical parts, luxury products, and shoe members, and can be more suitably used particularly for products used in an environment where moisture comes into contact and used for applications requiring shape stability when wetted with water.

Note that the present application is based on Japanese Patent Application (JP2023-017631) filed on February 8, 2023, which is incorporated by reference in its entirety.

**Claims**

1.　An artificial leather base material comprising a polyamide fiber and an elastic polymer, wherein in measurement data obtained by X-ray diffraction measurement of the polyamide fiber, a peak intensity $\gamma$ of a diffraction peak corresponding to a $\gamma$-type crystal of a polyamide resin constituting the polyamide fiber and a peak intensity $\alpha$ of a diffraction peak corresponding to an $\alpha$-type crystal of the polyamide resin satisfy a relationship of $0.690 \leq \gamma/\alpha \leq 1.100$.

2.　The artificial leather base material according to claim 1, wherein the polyamide fiber has an average diameter of 7.5 $\mu$m or less.

3.　The artificial leather base material according to claim 1, wherein the polyamide fiber has an average fineness of 0.50 dtex or less.

4.　The artificial leather base material according to claim 1, wherein the polyamide fiber comprises a polyamide resin and an olefin-maleic anhydride resin obtained by modifying a terminal of an olefin resin with maleic anhydride.

5.　The artificial leather base material according to claim 4, wherein a content of the olefin-maleic anhydride resin in the polyamide fiber is more than 0% by mass and 30% by mass or less.

**6.** The artificial leather base material according to claim 4, wherein the olefin-maleic anhydride resin is modified with a third component different from maleic anhydride.

**7.** The artificial leather base material according to claim 1, wherein a content of the elastic polymer is 5 to 45% by mass with respect to a total mass of the polyamide fiber and the elastic polymer.

**8.** A napped artificial leather obtained by napping a surface of the artificial leather base material according to any one of claims 1 to 7.

**9.** A method for producing the artificial leather base material according to any one of claims 1 to 7, the method comprising:

a step of spinning an ultrafine fiber-generating fiber using a water-soluble thermoplastic resin and a polyamide resin to which an olefin-maleic anhydride resin is added;
a step of preparing a fiber web formed from the ultrafine fiber-generating fiber;
a step of forming an entangled fiber sheet using the fiber web;
a step of impregnating the entangled fiber sheet with an elastic polymer; and
a step of removing the water-soluble thermoplastic resin from the ultrafine fiber-generating fiber at any time from before the impregnation to after the impregnation of the elastic polymer.

## INTERNATIONAL SEARCH REPORT

| | International application No. |
|---|---|
| | **PCT/JP2024/003973** |

| | | |
|---|---|---|
| **A.** | **CLASSIFICATION OF SUBJECT MATTER** | |
| | *D06N 3/00*(2006.01)i; *D06N 3/14*(2006.01)i | |
| | FI: D06N3/00; D06N3/14 | |
| According to International Patent Classification (IPC) or to both national classification and IPC | | |

| **B.** | **FIELDS SEARCHED** |
|---|---|
| Minimum documentation searched (classification system followed by classification symbols) | |
| D06N1/00-7/06; D01F8/00-8/18 | |
| Documentation searched other than minimum documentation to the extent that such documents are included in the fields searched | |
| Published examined utility model applications of Japan 1922-1996<br>Published unexamined utility model applications of Japan 1971-2024<br>Registered utility model specifications of Japan 1996-2024<br>Published registered utility model applications of Japan 1994-2024 | |
| Electronic data base consulted during the international search (name of data base and, where practicable, search terms used) | |

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | CN 103788636 A (AN'AN (CHINA) CO., LTD.) 14 May 2014 (2014-05-14)<br>claims, examples | 1-9 |
| A | CN 101376744 A (CHINA NATIONAL BLUESTAR (GROUP) CO., LTD.) 04 March 2009 (2009-03-04)<br>claims, background technology | 1-9 |
| A | JP 2007-154319 A (KURARAY CO., LTD.) 21 June 2007 (2007-06-21)<br>entire text | 1-9 |
| A | JP 60-134013 A (CHISSO CORPORATION) 17 July 1985 (1985-07-17)<br>entire text | 1-9 |
| A | CN 115322366 A (NATIONAL DONG HWA UNIVERSITY) 11 November 2022 (2022-11-11)<br>entire text | 1-9 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/003973** |

### C. DOCUMENTS CONSIDERED TO BE RELEVANT

| Category* | Citation of document, with indication, where appropriate, of the relevant passages | Relevant to claim No. |
|---|---|---|
| A | WO 2019/244862 A1 (TORAY INDUSTRIES, INC.) 26 December 2019 (2019-12-26) entire text | 1-9 |

Form PCT/ISA/210 (second sheet) (July 2022)

**INTERNATIONAL SEARCH REPORT**
Information on patent family members

International application No.

**PCT/JP2024/003973**

| Patent document cited in search report | | | Publication date (day/month/year) | Patent family member(s) | Publication date (day/month/year) |
|---|---|---|---|---|---|
| CN | 103788636 | A | 14 May 2014 | (Family: none) | |
| CN | 101376744 | A | 04 March 2009 | (Family: none) | |
| JP | 2007-154319 | A | 21 June 2007 | (Family: none) | |
| JP | 60-134013 | A | 17 July 1985 | (Family: none) | |
| CN | 115322366 | A | 11 November 2022 | (Family: none) | |
| WO | 2019/244862 | A1 | 26 December 2019 | EP 3812507 A1 whole document CN 112262238 A KR 10-2021-0018998 A | |

Form PCT/ISA/210 (patent family annex) (July 2022)

**EP 4 663 844 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006002288 A
- JP 2008308784 A
- JP 2014065979 A
- JP 2023017631 A